# EUROPÄISCHE PATENTSCHRIFT

(11) **EP 1 541 316 B1**
(45) Veröffentlichungstag und Bekanntmachung des Hinweises auf die Patenterteilung: **23.04.2008**
(21) Anmeldenummer: 04024152.3
(22) Anmeldetag: 09.10.2004
(51) Int. Cl.: B29C 45/14, B29C 33/12

(54) **Vorrichtung und Verfahren zur giesstechnischen Umhüllung eines Einlegeteils mit Kunststoff**
Device and process for covering an insert with plastic
Dispositif et procédé pour recouvrir un insert avec du plastique

(30) Priorität: 10.12.2003 DE 10357647
(43) Veröffentlichungstag der Anmeldung: 15.06.2005
(73) Patentinhaber: ROBERT BOSCH GMBH, 70442 Stuttgart (DE)
(72) Erfinder: Kull, Bernhard, 73630 Remshalden (DE); Gaffarelli, Clara, 71254 Ditzingen (DE); Waibler, Matthias, 73630 Remshalden-Hebsack (DE); Lang, Arno, 70178 Stuttgart (DE); Franke, Steffen, 70839 Gerlingen (DE); Greser, Florian, 70469 Stuttgart (DE)

(56) Entgegenhaltungen:
- DE-A1- 4 446 658
- US-A- 5 926 952
- PATENT ABSTRACTS OF JAPAN Bd. 1995, Nr. 08, 29. September 1995 (1995-09-29) -& JP 07 124998 A (TOYODA GOSEI CO LTD), 16. Mai 1995 (1995-05-16)
- PATENT ABSTRACTS OF JAPAN Bd. 016, Nr. 477 (M-1320), 5. Oktober 1992 (1992-10-05) & JP 04 173118 A (TOMOHITO INOUE; others: 02), 19. Juni 1992 (1992-06-19)

## Beschreibung

### Stand der Technik

Die Erfindung geht aus von einer Vorrichtung und einem Verfahren zur gießtechnischen Umhüllung eines Einlegeteils mit Kunststoff, insbesondere zur spritzgießtechnischen Umhüllung eines Einlegeteils eines vorzugsweise mehrpoligen Steckers mit thermoplastischem Kunststoff, nach dem Oberbegriff der Ansprüche 1 und 13. Ein derartiges Verfahren und eine zugehörige Spritzform sind aus der DE 44 46 658 C2 bekannt. Das dort beschriebene Verfahren dient zur Herstellung eines zwei- oder mehrpoligen Steckers an elektrischen Leitern, deren abisolierte Enden mit Kontaktstiften versehen und in einem Halteteil fixiert sind, welches beim Spritzvorgang mittel eines in das Halteteil hineinreichenden Zentrierstiftes in der Spritzform zentriert ist. Wegen des unvermeidlichen Spiels zwischen dem Zentrierstift und der Führungsbohrung kann hierbei jedoch ein leichtes Verkippen und eine Schiefstellung des Einlegeteils nicht völlig vermieden werden, wodurch Undichtigkeiten und unterschiedliche, nicht definierte Wandstärken an der Umhüllung entstehen.

Aus der JP-A-07124998 ist eine Vorrichtung zur gießtechnischen Umhüllung eines Einlegeteils mit Kunststoff bekannt. Ein Vorspritzling mit Einlegeteilen soll spritzgießtechnisch weiterverarbeitet werden. Hierbei soll vermieden werden, dass Kunststoffmasse in das Gewinde des Einlegeteils hineinläuft.

Der Erfindung liegt die Aufgabe zugrunde, die vorgenannten Nachteile zu vermeiden durch eine exakte und spielfreie Anordnung des Einlegeteils in der Gießform um hierdurch insbesondere definierte Wandstärken der Umhüllung des Einlegeteils sicher zu stellen. Diese Aufgabe wird gelöst durch die kennzeichnenden Merkmale der Ansprüche 1 und 13.

Als vorteilhaft hat es sich erwiesen, wenn der Zentrierstift an seinem dem Einlegeteil zugewandten Ende ein Gewinde zum Einschrauben in die Öffnung im Einlegeteil aufweist. Durch die Anbringung des Gewindes an einem metallischen Zentrierstift kann bei den meisten für derartige Einlegeteile verwendeten Materialien am Einlegeteil selbst auf ein Gegengewinde verzichtet werden. Dies gilt insbesondere, wenn das Gewinde selbstschneidend ausgebildet ist. Die Zentrierung und Arretierung des Zentrierstiftes in der Öffnung des Einlegeteils wird dabei noch weiter verbessert, wenn die Öffnung im Einlegeteil in Einschraubrichtung des Zentrierstiftes verjüngt ist. Zur Sicherstellung des Eingriffs des Zentrierstiftes in die vorzugsweise abgestufte und am Eingang verbreiterte Öffnung des Einlegeteils ist dieser zweckmäßigerweise in Achsrichtung federnd derart gelagert, dass er im geschlossenen Zustand der Gießform mit Vorspannung in die Öffnung eingreift.

Ferner hat es sich als besonders vorteilhaft erwiesen, wenn auf der einem Kern des Werkzeugs zugewandten Stirnseite des Einlegeteils noppenförmige Vorsprünge ausgebildet sind zur Abstützung des Einlegeteils am Werkzeug im eingeschraubten Zustand des Zentrierstiftes. Hierdurch wird die Ausrichtung des Einlegeteils im Gießwerkzeug weiter verbessert, weil durch die noppenförmigen Vorsprünge eine definierte Abstützung des Einlegeteils am Werkzeug und hierdurch wiederum eine definierte Wandstärke der Umhüllung gesichert ist.

Zur Abdichtung des Bereiches um den Zentrierstift herum gegen die eingebrachte Vergussmasse hat es sich weiterhin als zweckmäßig erwiesen, zwischen den Stirnseiten des Werkzeugs und des Einlegeteils um den Zentrierstift herum wenigstens eine Quetschlippe auszubilden, welche entweder am Werkzeug als metallische Quetschlippe oder am Einlegeteil aus dem hierfür verwendeten Material ausgebildet wird. Hierdurch erreicht man eine einwandfreie Abdichtung zur Vermeidung von Kunststoffrückständen am Werkzeug und/oder am Zentrierstift.

Der Antrieb des Dornes und des Zentrierstiftes in Vorschubrichtung und in Drehrichtung erfolgt vorzugsweise durch die Auswurfmechanik der Gießeinrichtung. Hierdurch lässt sich zusätzlicher Aufwand für einen separaten Antrieb vermeiden.

Weitere Einzelheiten und vorteilhafte Ausgestaltungen der Erfindung ergeben sich aus den Unteransprüchen sowie aus der Beschreibung und der Zeichnung eines Ausführungsbeispiels. Diese zeigt in
Figur 1 eine perspektivische Prinzipdarstellung einer erfindungsgemäßen Vorrichtung, in
Figur 2 einen Schnitt durch die Vorrichtung im Bereich zwischen Einlegeteil und Werkzeug beim Schließen der Gießform, in
Figur 3 einen Schnitt durch die Vorrichtung mit an das Werkzeug angepresstem Einlegeteil, in
Figur 4 einen Schnitt durch die Vorrichtung vor dem Öffnen der Gießform während des Herausführens des Dornes mit dem Zentrierstift aus der Öffnung des Einlegeteils und in
Figur 5 eine Darstellung der Werkzeugstirnfläche mit einer angeformten Quetschlippe im Bereich um den Austritt des Zentrierstiftes herum.

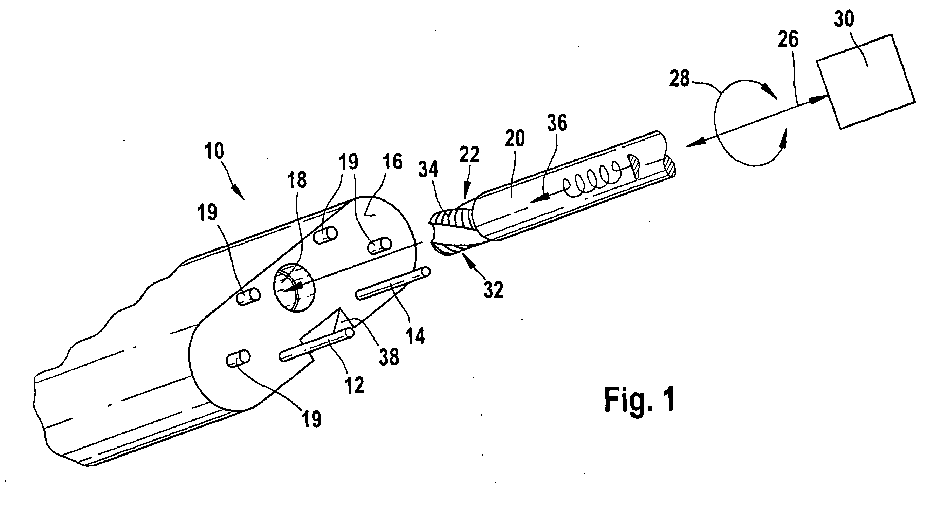

In Figur 1 ist mit 10 ein Einlegeteil bezeichnet, welches hohl ausgebildet ist zur Aufnahme eines nicht dargestellten elektrischen Kabels, dessen Adern im Inneren des Einlegeteils 10 mit zwei Kontaktpins 12 und 14 verbunden sind, die aus der Stirnseite 16 des Einlegeteils herausragen. Das Einlegeteil 10 ist aus thermoplastischem oder duroplastischem Kunststoff hergestellt und weist auf seiner Stirnseite 16 eine abgestufte Öffnung 18 sowie vier noppenartige Vorsprünge 19 auf. Das Einlegeteil 10 ist nach dem Umgießen Teil eines zweipoligen Steckers, welcher in einer in den folgenden Figuren nur teilweise dargestellten Gießform durch Spritzgießen mit thermoplastischem Kunststoff umhüllt wird. Auf die Darstellung des fertigen Steckers mit der Umhüllung ist in der Zeichnung zwecks klarerer Darstellung der erfindungswesentlichen Teile verzichtet worden.

Dem Einlegeteil 10 gegenüber ist ein Dorn 20 angeordnet mit einem Zentrierstift 22 an seinem vorderen Ende, welcher in dem in Figur 1 nicht dargestellten Kern des Werkzeugs längsverschiebbar und drehbar geführt ist. Die Längsverschiebung des Dorns 20 ist durch einen Pfeil 26, die Verdrehung durch einen Pfeil 28 angedeutet. Den Antrieb für den Dorn 20 mit dem Zentrierstift 22 bewirkt die in Figur 1 nur als Baueinheit dargestellte Auswurfmechanik 30 der Gießvorrichtung.

Die Anpressung des Einlegeteils 10 an das Werkzeug erfolgt durch Einschrauben des Zentrierstiftes 22 in die Öffnung 18 im Einlegeteil 10. Hierzu besitzt der Zentrierstift 22 ein selbstschneidendes Gewinde 32 mit messerförmigen Erhebungen 34, mittels derer der Zentrierstift 22 bei Rechtsdrehung in die nach innen verjüngte Öffnung 18 im Einlegeteil 10 einschraubbar und bei Linksdrehung herausschraubbar ist. Die Tiefe der Öffnung 18 entspricht mindestens dem Anpressweg des Einlegeteils 10 zum Werkzeug hin. Der Dorn 20 mit dem Zentrierstift 22 steht weiterhin unter axialer Vorspannung zum Einführen und Anpressen des Zentrierstiftes 22 in die Öffnung 18. Die axiale Vorspannung ist in Figur 1 durch einen Pfeil 36 mit Federvorspannung dargestellt. Der Verdrehwinkel des Zentrierstiftes 22 beim Ein- und Ausschrauben beträgt 30°-180°, vorzugsweise etwa 45° mit entsprechend steil verlaufenden Gewindegängen.

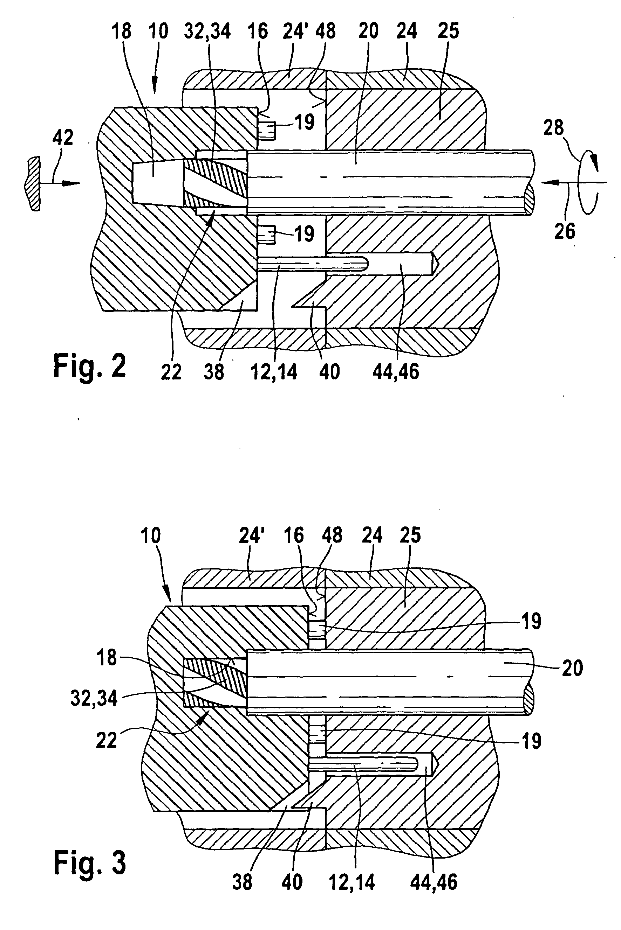

Figur 2 zeigt einen Schnitt durch die Vorrichtung im Bereich der Stirnseite des Einlegeteils 10 und des in Figur 1 nicht dargestellten, an der Stirnseite des Einlegeteils 10 geteilten Werkzeugs 24,24' mit seinem Kern 25 zu Beginn des Einschraubvorgangs. Hierbei wird der Zentrierstift 22 entsprechend dem Pfeil 36 in Figur 1 zunächst durch Federkraft in die Öffnung 18 hineingedrückt und dann unter Druck entsprechend dem Pfeil 28 in Rechtsdrehung versetzt. Das Einlegeteil 10 ist in der nicht weiter dargestellten Gießform arretiert gegen den von dem Zentrierstift 22 ausgeübten axialen Druck. Die Arretierung des Einlegeteils in axialer Richtung ist durch einen verankerten Pfeil 42 angedeutet. Außerdem sind am Einlegeteil 10 eine Einkerbung 38 und am Kern 25 des Werkzeugs 24 ein Vorsprung 40 vorgesehen, welche gemeinsam eine Verdrehsicherung für das Einlegeteil 10 beim Ein- und Ausschrauben des Zentrierstiftes 22 bilden.

Zu Beginn des Prozesses befindet sich das Einlegeteil 10, wie aus Figur 2 ersichtlich, mit seinen noppenförmigen Vorsprüngen 19 noch im Abstand von der Stirnseite 48 des Kerns 25 des Werkzeuges 24. Die Kontaktpins 12 und 14 ragen dabei schon in Aussparungen 44, 46 im Kern 25 des Werkzeugs 24 hinein, deren Abmessungen etwa den Abmessungen der Kontaktpins entsprechen, so dass diese eine weitere Verdrehsicherung und Führung für das Einlegeteil 10 beim Ein- und Ausschraubvorgang bilden, wobei jedoch der Hauptteil der Verdrehkräfte durch die Einkerbung 38 und den Vorsprung 40 aufgenommen wird.

Figur 3 zeigt die Anordnung im eingeschraubten Zustand des Zentrierstiftes 22, das heißt in der Gießposition. Aus dieser Darstellung ist deutlich zu erkennen, dass durch die Anpressung der noppenförmigen Vorsprünge 19 des Einlegeteils 10 an die Stirnfläche 48 des Werkzeugkerns 25 eine sichere und definierte Arretierung des Einlegeteils 10 gewährleistet und hierdurch wiederum definierte Wandstärken des nicht dargestellten Vergusses rund um das Einlegeteil 10 herum sicher gestellt sind.

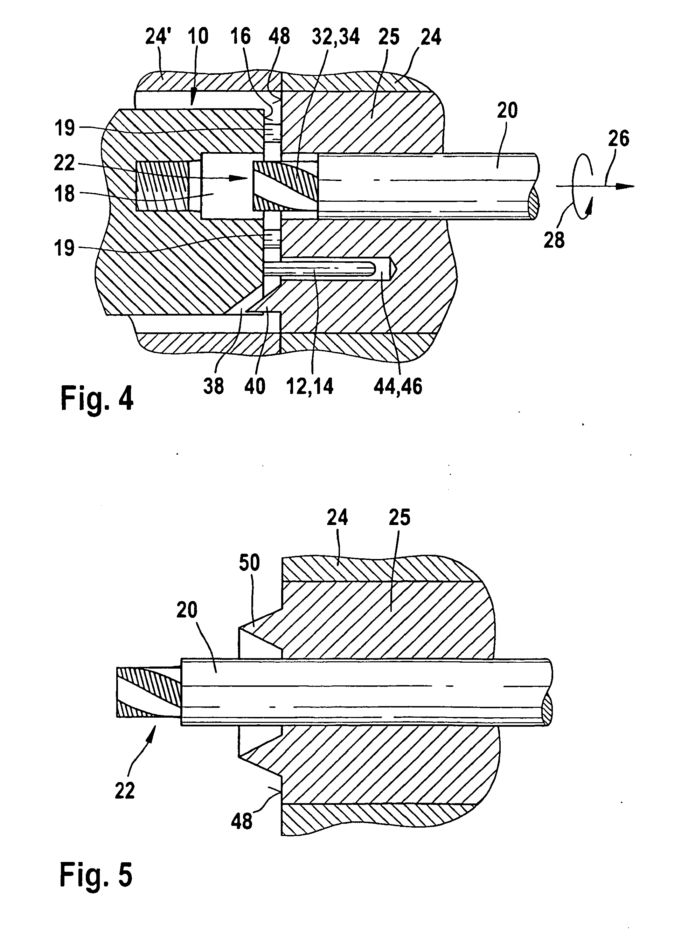

Figur 4 zeigt den Ausschraubvorgang des Zentrierstiftes 22 aus der Öffnung 18 des Einlegeteils 10. Das Ausschrauben des Dornes 20 mit dem Zentrierstift 22 erfolgt wiederum durch die nicht dargestellte Auswurfmechanik 30, welche nach dem Ausschrauben des Zentrierstiftes 22 den fertig umspritzten Stecker mit dem Einlegeteil 10 und den beiden Kontaktpins 12 und 14 aus der Gießform auswirft. Auf die vollständige Darstellung der Gießform mit dem die Außenkontur des Steckers bestimmenden Teil des Werkzeugs ist in den Zeichnungen zugunsten einer klareren Darstellung der erfindungswesentlichen Teile verzichtet worden.

In Figur 5 ist schematisch die Abdichtung des Austrittsbereiches des Dorns 20 und des Zentrierstiftes 22 dargestellt, welche das Eindringen der Vergussmasse in diesen Bereich verhindert. Hierzu ist der dem Einlegeteil 10 zugewandte Bereich der Stirnseite 48 des Werkzeugkerns 25 mit einer an diesen angeformten Quetschlippe 50 versehen, welche den Durchtrittsbereich des Dorns 20 vollständig umgibt und vorzugsweise kreisförmig ausgebildet ist. Die Quetschlippe 50 kann jedoch auch an der Stirnfläche 16 des Einlegeteils 10 vorgesehen werden im Bereich um die Öffnung 18 herum. In diesem Fall besteht die Quetschlippe 50 aus dem Material des Einlegeteils 10 und ist gegebenenfalls geringfügig verformbar, bei der Ausbildung der Quetschlippe 50 am Werkzeugkern 25 besteht sie aus dem Werkzeugmaterial, in der Regel aus Metall.

## Patentansprüche

1. Vorrichtung zur gießtechnischen Umhüllung eines Einlegeteils mit Kunststoff, insbesondere zur spritzgießtechnischen Umhüllung eines Einlegeteils eines vorzugsweise mehrpoligen Steckers mit thermoplastischem Kunststoff, wobei das Einlegeteil in eine Gießform eingebracht wird, welche ein die Kontur der Umhüllung bestimmendes Werkzeug mit einem Kern und einem darin längsverschiebbaren Dorn aufweist, der an seinem dem Einlegeteil zugewandten Ende einen in das Einlegeteil einbringbaren Zentrierstift besitzt, wobei der Zentrierstift (22) zusammen mit dem Dorn (20) im Werkzeug (24,25) verdrehbar und längsverschiebbar gehalten und in einer Öffnung (18) im Einlegeteil (10) verschraubbar ist, wobei der Zentrierstift (22) an seinem dem Einlegeteil (10) zugewandten Ende ein Gewinde (32) zum Einschrauben in die Öffnung (18) im Einlegeteil (10) aufweist, **dadurch gekennzeichnet, dass** das Gewinde (32) selbstschneidend ausgebildet ist.

2. Vorrichtung nach einem der vorhergehenden Ansprüche, **dadurch gekennzeichnet, dass** die Öffnung (18) im Einlegeteil (10) in Einschraubrichtung des Zentrierstiftes (22) verjüngt ist.

3. Vorrichtung nach einem der vorhergehenden Ansprüche, **dadurch gekennzeichnet, dass** der Zentrierstift (22) in Einschraub- und Ausschraubrichtung jeweils um 30° bis 180°, vorzugsweise um ca. 45°, verdrehbar ist.

4. Vorrichtung nach einem der vorhergehenden Ansprüche, **dadurch gekennzeichnet, dass** der Dorn (20) mit dem Zentrierstift (22) im Werkzeug (24,25) in Achsrichtung federnd gelagert ist.

5. Vorrichtung nach einem der vorhergehenden Ansprüche, **dadurch gekennzeichnet, dass** auf der dem Werkzeug (24,25) zugewandten Stirnseite (16) des Einlegeteils (10) noppenförmige Vorsprünge (19) ausgebildet sind zur Abstützung des Einlegeteils (10) am Kern (25) des Werkzeugs (24) im eingeschraubten Zustand des Zentrierstiftes (22).

6. Vorrichtung nach einem der vorhergehenden Ansprüche **dadurch gekennzeichnet, dass** auf der dem Einlegeteil (10) zugewandten Stirnseite (48) des Werkzeugs (24,25) um den Zentrierstift (22) herum wenigstens eine Quetschlippe (50) ausgebildet ist.

7. Vorrichtung nach einem der vorhergehenden Ansprüche, **dadurch gekennzeichnet, dass** das Werkzeug (24,25) an seiner dem Einlegeteil (10) zugewandten Stirnseite (48) wenigstens eine Aussparung (44,46) besitzt für die Aufnahme wenigstens eines Kontaktpins (12,14) an einem zur Herstellung eines Steckers ausgebildeten Einlegeteil (10).

8. Vorrichtung nach einem der vorhergehenden Ansprüche, **dadurch gekennzeichnet, dass** der Dorn (20) und der Zentrierstift (22) durch eine Auswurfmechanik (30) der Gießeinrichtung verdrehbar (28) und längsverschiebbar (26) sind.

9. Vorrichtung nach einem der vorhergehenden Ansprüche, **dadurch gekennzeichnet, dass** das Einlegeteil (10) am Werkzeug (24,25) durch eine Verdrehsicherung (38,40) arretierbar ist.

10. Verfahren zur gießtechnischen Umhüllung eines Einlegeteils mit Kunststoff, insbesondere zur spritzgießtechnischen Umhüllung eines Einlegeteils eines vorzugsweise mehrpoligen Steckers mit thermoplastischem Kunststoff, wobei das Einlegeteil in eine Gießform eingebracht wird, welche ein die Kontur der Umhüllung bestimmendes Werkzeug mit einem Kern und einem darin längsverschiebbaren Dorn aufweist, der an seinem dem Einlegeteil zugewandten Ende einen in das Einlegeteil einbringbaren Zentrierstift besitzt, wobei das Einlegeteil (10) durch Einschrauben des Zentrierstiftes (22) an das Werkzeug (24,25) anpressbar ist, **dadurch gekennzeichnet, dass** der Zentrierstift (22) mittels selbstschneidender Gewindevorsprünge (32,34) an seinem dem Einlegeteil (10) zugewandten Ende in eine sich nach innen verjüngende Öffnung (18) im Einlegeteil (10) einschraubbar ist.

11. Verfahren nach Anspruch 10, **dadurch gekennzeichnet, dass** das Einlegeteil (10) mit noppenförmigen Vorsprüngen (19) auf seiner dem Werkzeug (24,25) zugewandten Stirnseite (16) beim Einschrauben des Zentrierstiftes (22) mit definiertem Abstand entsprechend der vorgesehenen Wandstärke an das Werkzeug (24) anpressbar ist.

12. Verfahren nach Anspruch 10 oder 11, **dadurch gekennzeichnet, dass** das Einlegeteil (10) gegenüber dem Werkzeug (24,25) durch Aussparungen (38;44,46) und vorspringende Teile (12,14;40) verdrehsicher gehalten wird.

13. Verfahren nach einem der Ansprüche 10 bis 12, **dadurch gekennzeichnet, dass** der Zentrierstift (22) beim Schließen der Gießform (24,24',25) federnd in die Öffnung (18) im Einlegeteil (10) hineingedrückt wird.

## Claims

1. Device for covering an insert with plastic by moulding, in particular for covering an insert of a preferably multi-pin plug with thermoplastic material by injection moulding, the insert being introduced into a casting mould which has a tool that determines the contour of the covering and has a core and a mandrel which is longitudinally displaceable in the latter and has, at its end towards the insert, a centring pin that can be introduced into the insert, wherein the centring pin (22) is held in the tool (24, 25) in such a way that it can be turned and displaced longitudinally together with the mandrel (20) and can be screwed in an opening (18) in the insert (10), wherein the centring pin (22) has at its end towards the insert (10) a thread (32) for screwing into the opening (18) in the insert (10), **characterized in that** the thread (32) is formed as a self-tapping thread.

2. Device according to one of the preceding claims, **characterized in that** the opening (18) in the insert (10) is tapered in the screwing-in direction of the centring pin (22).

3. Device according to one of the preceding claims, **characterized in that** the centring pin (22) can be turned in the screwing-in and unscrewing directions respectively by 30° to 180°, preferably by about 45°.

4. Device according to one of the preceding claims, **characterized in that** the mandrel (20) is axially spring-mounted by the centring pin (22) in the tool (24, 25).

5. Device according to one of the preceding claims, **characterized in that** stub-shaped projections (19) are formed on the end face (16) of the insert (10) that is towards the tool (24, 25), to support the insert (10) on the core (25) of the tool (24) in the screwed-in state of the centring pin (22).

6. Device according to one of the preceding claims, **characterized in that** at least one pinch lip (50) is formed around the centring pin (22) on the end face (48) of the tool (24, 25) that is towards the insert (10).

7. Device according to one of the preceding claims, **characterized in that** the tool (24, 25) has, at its end face (48) towards the insert (10), at least one recess (44, 46) for receiving at least one contact pin (12, 14) on an insert (10) that is formed for producing a plug.

8. Device according to one of the preceding claims, **characterized in that** the mandrel (20) and the centring pin (22) can be turned (28) and can be longitudinally displaced (26) by an ejecting mechanism (30) of the moulding apparatus.

9. Device according to one of the preceding claims, **characterized in that** the insert (10) can be arrested on the tool (24, 25) by a means of preventing turning (38, 40).

10. Process for covering an insert with plastic by moulding, in particular for covering an insert of a preferably multi-pin plug with thermoplastic material by injection moulding, the insert being introduced into a casting mould which has a tool that determines the contour of the covering and has a core and a mandrel which is longitudinally displaceable in the latter and has, at its end towards the insert, a centring pin that can be introduced into the insert, wherein the insert (10) can be pressed against the tool (24, 25) by screwing in the centring pin (22), **characterized in that** the centring pin (22) can be screwed into an inwardly tapering opening (18) in the insert (10) at its end facing the insert (10) by means of self-tapping thread projections (32,34).

11. Process according to Claim 10, **characterized in that** the insert (10) with stub-shaped projections (19) on its end face (16) towards the tool (24, 25) can be pressed against the tool (24) when the centring pin (22) is screwed in, with a defined spacing corresponding to the intended wall thickness.

12. Process according to Claim 10 or 11, **characterized in that** the insert (10) is held in such a way as to prevent turning with respect to the tool (24, 25) by recesses (38; 44, 46) and projecting parts (12, 14; 40).

13. Process according to one of Claims 10 to 12, **characterized in that** the centring pin (22) is pressed resiliently into the opening (18) in the insert (10) when the casting mould (24, 24', 25) is closed.

## Revendications

1. Dispositif pour enrober par injection, un insert avec de la matière plastique, notamment pour enrober par injection un insert d'un connecteur, de préférence multipolaire, avec de la matière thermoplastique, selon lequel
on place l'insert dans un moule d'injection ayant un outil définissant le contour de l'enveloppe, cet outil ayant un noyau et une broche coulissant longitudinalement, dont l'extrémité tournée vers l'insert possède une broche de centrage qui s'introduit dans l'insert,
la broche de centrage (22) tenue avec la broche (20) de façon mobile en rotation et en coulissement longitudinal dans l'outil (24, 25) se visse dans une ouverture (18) de l'insert (10),
la broche de centrage (22) ayant un filetage (32) à son extrémité tournée vers l'insert (10) pour se visser dans l'orifice (18) de l'insert (10),
**caractérisé en ce que**
le filetage (32) est auto-taraudant.

2. Dispositif selon la revendication 1,
**caractérisé en ce que**
l'orifice (18) de l'insert (10) est rétréci dans la direction de vissage de la broche de centrage (22).

3. Dispositif selon l'une des revendications précédentes,
**caractérisé en ce que**
la broche de centrage (22) peut être tournée dans le sens du vissage ou du dévissage, respectivement de 30° à 180° et de préférence d'environ 45°.

4. Dispositif selon l'une des revendications précédentes,
**caractérisé en ce que**
la broche (20) est montée de manière élastique dans la direction axiale avec la broche de centrage (22) dans l'outil (24, 25).

5. Dispositif selon l'une des revendications précédentes,
**caractérisé en ce que**
le côté frontal (16) de l'insert (18) tourné vers l'outil (24, 25) comporte des saillies en forme de bossages (19) pour soutenir l'insert (10) contre le noyau (25) de l'outil (24) lorsque la broche de centrage (22) est en position vissée.

6. Dispositif selon l'une des revendications précédentes,
**caractérisé en ce que**
la face frontale (48) de l'outil (24,25) tournée vers l'insert (10) comporte au moins une lèvre d'écrasement (50) autour de la broche de centrage (22).

7. Dispositif selon l'une des revendications précédentes,
**caractérisé en ce que**
l'outil (24, 25) comporte sur sa face frontale (48) tournée vers l'insert (10), au moins une cavité (44, 46) pour recevoir au moins une broche de contact (12, 14) de l'insert (10) servant à fabriquer un connecteur.

8. Dispositif selon l'une des revendications précédentes,
**caractérisé en ce que**
la broche (20) et la broche de centrage (22) peuvent être tournées (28) et coulissées longitudinalement (26) par un mécanisme d'éjecteur (30) dans l'installation d'injection (9).

9. Dispositif selon l'une des revendications précédentes,
**caractérisé en ce que**
l'insert (10) se bloque sur l'outil (24, 25) par un blocage en rotation (38, 40).

10. Procédé pour envelopper par injection un insert en matière plastique, notamment pour envelopper par injection un insert d'un connecteur, de préférence multipolaire avec de la matière thermoplastique, selon lequel on met l'insert dans un moule de coulée ayant un outil définissant le contour de l'enveloppe avec un noyau et une broche coulissant longitudinalement dans celui-ci, et dont l'extrémité tournée vers l'insert comporte une broche de centrage qui vient dans l'insert,
l'insert (10) étant pressé contre l'outil (24, 25) par vissage de la broche de centrage (22),
**caractérisé en ce que**
la broche de centrage (22) se visse par une partie en saillie filetée auto-taraudeuse (32, 34) à son extrémité tournée vers l'insert (10) dans un orifice (18) de l'insert (10), orifice qui diminue vers l'intérieur.

11. Procédé selon la revendication 10,
**caractérisé en ce que**
l'insert (10) comportant des saillies en forme de bossages (19) sur sa face frontale (16) tournée vers l'outil (24, 25) lors du vissage de la broche de centrage (22), est pressé avec un écart défini correspondant à l'épaisseur prévue de la paroi contre l'outil (24).

12. Procédé selon la revendication 10 ou 11,
**caractérisé en ce que**
l'insert (10) est tenu bloqué en rotation par rapport à l'outil (24, 25) par des cavités (38 ; 44, 46) et des parties en saillie (12, 14 ; 40).

13. Procédé selon l'une des revendications 10 à 12,
**caractérisé en ce que**
la broche de centrage (22) est enfoncée élastiquement dans l'ouverture (18) de l'insert (10) lors de la fermeture du moule (24, 24', 25).
